Europäisches Patentamt

European Patent Office

Office européen des brevets

(19)

(11) Numéro de publication: **0 042 805**

**A1**

(12) # DEMANDE DE BREVET EUROPEEN

(21) Numéro de dépôt: **81401014.6**

(22) Date de dépôt: **23.06.81**

(51) Int. Cl.³: **G 01 V 9/04**
**G 02 B 17/06**

(30) Priorité: **23.06.80 FR 8013832**

(43) Date de publication de la demande:
**30.12.81 Bulletin 81/52**

(84) Etats contractants désignés:
**AT BE CH DE FR GB IT LI LU NL SE**

(71) Demandeur: **COMETA Société Anonyme dite:**
**Avenue du Vercors**
**F-38700 Montfleury(FR)**

(72) Inventeur: **Montanvert, Michel**
**36, rue Saint-Robert**
**F-38120 Saint-Egreve(FR)**

(74) Mandataire: **Ricalens, François et al,**
**Chef du Service de la Propriété Industrielle du Groupe**
**IMETAL 1, avenue Albert Einstein**
**F-78191 Trappes Cedex(FR)**

(54) **Barrière photo-électrique bi-dimensionnelle.**

(57) Dispositif comprenant un émetteur photoélectrique oscillant mécaniquement, un miroir parabolique et un miroir
hyperbolique de même foyer, et ayant leur concavité tournée
dans le même sens, l'émetteur photoélectrique oscillant
étant situé de telle sorte que le faisceau lumineux émis soit
réfléchi d'abord par le miroir hyperbolique, puis par le miroir
parabolique.

Application à la construction de barrières immatérielles.

Fig. 1

EP 0 042 805 A1

La présente invention concerne une barrière immatérielle bi-dimensionnelle par exemple destinée à servir de dispositif protecteur contre les accidents sur les machines-outils telles que presses, poinçonneuses, laminoirs, etc... ou de protection de zone.

Les barrières immatérielles bi-dimensionnelles connues sont pour la plupart constituées par une pluralité de dispositifs comportant au moins une cellule photo-électrique, une source lumineuse et le cas échéant un réflecteur. De telles barrières sont très couteuses dès que la surface protégée par la barrière bi-dimensionnelle est importante, c'est-à-dire dès lors qu'un nombre important de cellules photo-électriques et de sources lumineuses est nécessaire pour couvrir la surface à protéger.

C'est pourquoi un autre type de barrières immatérielles connues comprennent une source lumineuse, un réflecteur et un récepteur photo-électrique, celui-ci étant du même côté que la source lumineuse. Entre la source lumineuse et le réflecteur, on dispose en général un miroir plan oscillant situé au foyer d'un miroir parabolique ; dans ces conditions, le faisceau lumineux issu de la source lumineuse balaye la surface du miroir parabolique et par là-même toute la hauteur du récepteur.

De tels dispositifs émetteurs de lumière ne permettent pas d'obtenir des barrières immatérielles de grande hauteur sauf en utilisant des miroirs paraboliques de grande surface et en faisant osciller les miroirs plans avec de grandes amplitudes. En outre, il est difficile voire impossible de faire osciller les miroirs plans avec une vitesse suffisante pour que le balayage de la surface à protéger soit assez rapide pour conférer une protection efficace.

Aussi un des buts de la présente invention qui permette de faire balayezr rapidement par un rayon lumineux une zone bi-dimensionnelle, c'est-à-dire une surface, importante, et ce avec une fréquence élevée.

Un autre but de l'invention est de fournir un dispositif qui permet de détecter des objets de faible dimension.

Un objet de cette invention est un dispositif fiable, robuste et aussi simple que possible.

Un autre objet de l'invention est de fournir un dispositif de ce type ayant un aussi faible encombrement que possible.

Ces buts et ces objets, ainsi que d'autres qui apparaîtront par la suite, sont atteints par une barrière immatérielle bi-dimensionnelle caractérisée par le fait qu'elle comporte un émetteur photo-électrique oscillant mécaniquement, un miroir parabolique et un miroir hyperbolique de même foyer, et ayant leur concavité tournée dans le même sens, l'émetteur photo-électrique oscillant étant situé de telle sorte que le faisceau lumineux émis soit réfléchi d'abord par le miroir hyperbolique, puis par le miroir parabolique.

De préférence, l'émetteur photo-électrique oscillant est situé au foyer extérieur du miroir hyperbolique.

Avantageusement, les deux miroirs sont légèrement décalés l'un par rapport à l'autre de telle sorte que le miroir hyperbolique n'intercepte pas les rayons lumineux issus du miroir parabolique.

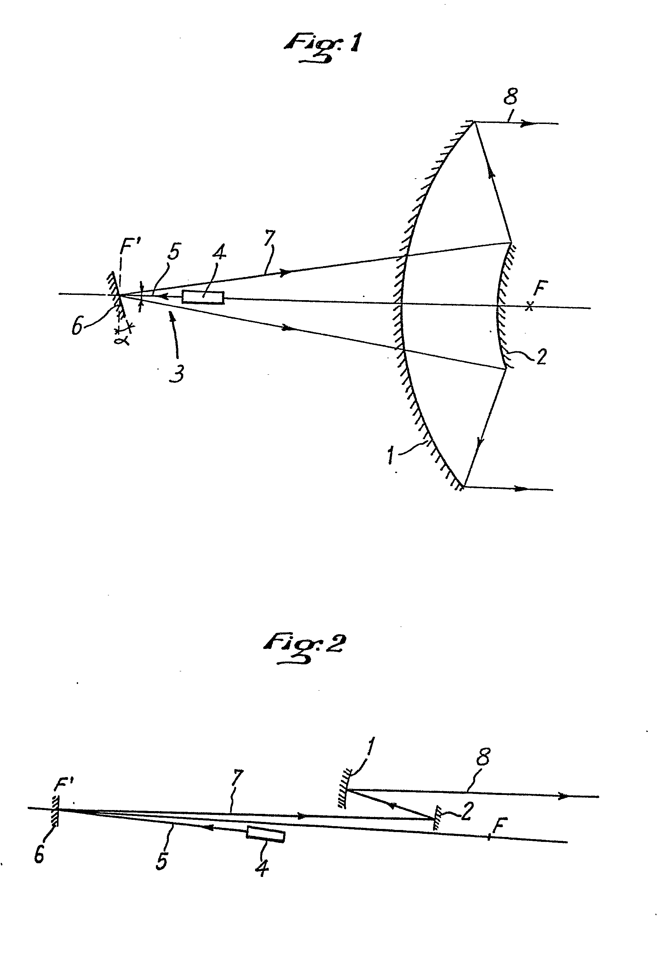

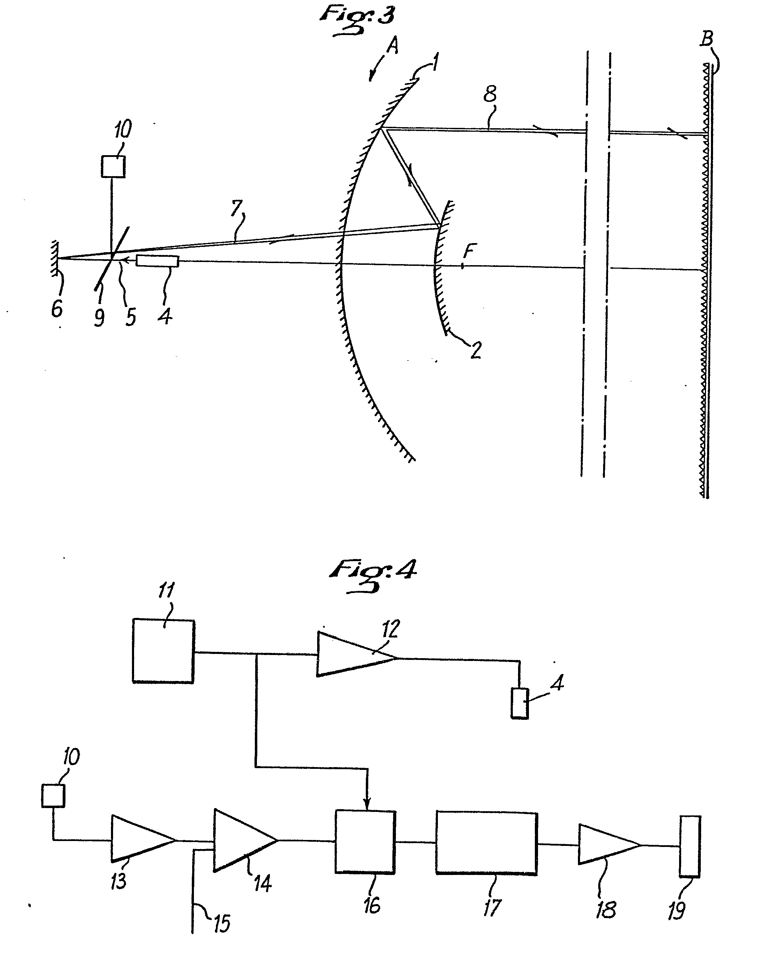

Ce décalage doit-être réalisé de manière à respecter les propriétés géométriques et optiques des miroirs paraboliques et hyperboliques. Ainsi on peut réaliser le système amplificateur d'angle mis en oeuvre par la présente invention en associant deux miroirs ayant respectivement la forme d'un paraboloïde et d'un hyperboloïde de révolution et un même foyer ; puis en découpant des portions de ces miroirs à l'aide de plans parallèles. Ces plans de découpe étant choisis de manière à obtenir deux portions de miroirs décalés comme spécifiésci-dessus et explicités dans la figure 2.

Selon un mode de réalisation de l'invention préféré l'émetteur photo-électrique oscillant comprend un miroir plan oscillant d'un angle déterminé autour de son axe vertical et une source lumineuse fixe.

Avantageusement, ce miroir plan est porté par un cadre galvanique.

Selon un autre mode préféré de réalisation, l'émetteur photo-électrique oscillant comprend une source lumineuse fixe et un miroir polygonal qui est animé d'un mouvement de rotation, et dont le nombre de faces est de $2\pi/\alpha$, $2\alpha$ étant le déplacement angulaire exprimé en radians du rayon lumineux émis nécessaire pour couvrir toute la surface du miroir hyperbolique.

Il convient de noter que l'utilisation d'un miroir polygonal ne permet pas d'avoir une source ponctuelle au sens strict du terme et il existe quelques écarts à la géométrie théorique. Toutefois, ces écarts sont d'autant plus faibles que le nombre des faces du polygone régulier utilisé est élevé. C'est pourquoi selon ce mode de réalisation de l'invention il est avantageux d'utiliser des miroirs polygonaux à plus de douze faces et de préférence à plus de vingt-quatre faces. Il faut souligner que l'utilisation de miroirs polygonaux n'était pas permise par les barrières utilisant simplement un miroir hyperbolique. Il va de soi que le miroir polygonal doit être placé de manière que la portion de surface, assimilée à un point, ou se joignent tous les rayons lumineux réfléchis par le miroir soit aussi proche que possible du foyer de l'hyperbole autre que celui commun avec la parabole.

La description qui va suivre et qui ne présente aucun caractère limitatif permettra de bien comprendre comment la présente invention peut être réalisée. Elle doit être lue en regard des figures annexées, parmi lesquelles :

- la figure 1 représente schématiquement, en coupe verticale, un dispositif selon l'invention ;
- la figure 2 est une vue de dessus de ce dispositif ;
- la figure 3 représente en élévation une application de ce dispositif à la réalisation d'une barrière immatérielle ;
- la figure 4 est un synoptique des circuits électroniques pour le fonctionnement d'une telle barrière.

- la figure 5 montre comment plusieurs barrières unitaires selon l'invention peuvent être montées ensemble.

Le dispositif selon la présente invention fait application de propriétés particulières des coniques que sont la parabole et l'hyperbole.

On sait que la propriété géométrique de l'hyperbole est que la normale issue d'un point courant de cette hyperbole est la bissectrice des droites issues de ce point et passant par les foyers de cette hyperbole.

Par ailleurs, un miroir parabolique a la propriété de réfléchir un faisceau incident issu de son foyer F en un faisceau parallèle à l'axe de la parabole.

Afin de mettre en oeuvre les deux propriétés sommairement rappelées ci-dessus, on réalise, ainsi qu'on peut le voir sur la figure 1, un dispositif amplificateur optique comprenant un miroir parabolique 1 de foyer F, un miroir hyperbolique 2 de même foyer F et un émetteur photo-électrique oscillant désigné par le repère 3 dans son ensemble. Ces deux miroirs 1 et 2 sont respectivement des portions étroites de paraboloïde et d'hyperboloïde de révolution.

L'émetteur photo-électrique oscillant 3 est constitué par une source lumineuse fixe 4 qui émet un faisceau lumineux 5, et par un miroir plan 6 mobile autour de son axe vertical situé au foyer F' du miroir hyperbolique 2.

La source lumineuse 4 peut être par exemple une diode laser qui a pour avantage de constituer une source de très faible divergence, ou une diode électroluminescente dont la mise en oeuvre est plus facile.

Il est bien évident que, pour qu'un tel dispositif fonctionne convenablement, il est nécessaire que les différents faisceaux lumineux ne se trouvent pas dans le même plan. En conséquence, il faut que le miroir parabolique 1, le miroir hyperbolique 2 et la source lumineuse 4 soient décalés les uns par rapport aux autres comme cela est représenté sur la figure 2. Sur cette dernière figure sont représentés les plans de découpe ayant permis un dé-

- 5 -

0042805

coupage convenanble des portions de miroir.

En fonctionnement, le miroir plan 6, en oscillant d'un angle $\alpha$ autour de son axe vertical, entraîne une déviation 2 du faisceau réfléchi 7 par rapport au faisceau incident 5. Celui-là, après réflexion sur le miroir hyperbolique 2 puis sur le miroir parabolique 1, est transformé en une succession continue de faisceaux parallèles 8.

Afin d'obtenir une succession rapide de faisceaux parallèles 8, il convient que le miroir plan 6 oscille à une fréquence élevée, de l'ordre de 100 à 1 000 hertz.

Par exemple, une telle oscillation angulaire du miroir plan 6 peut être obtenue en le rendant solidaire de l'axe d'un galvanomètre, lui-même excité par un courant dont la fréquence correspond à celle des oscillations souhaitées.

Selon un autre mode de réalisation, ce miroir plan 6 est constitué par des faces d'un polygone animé d'un mouvement de rotation uniforme, celles-ci faisant entre elles un angle .

L'oscillation angulaire du miroir plan 6 est telle que le faisceau lumineux 7 balaye la surface du miroir hyperbolique 2 et par là-même la surface totale du miroir parabolique 1 : ainsi pour un angle d'oscillation de 15°, les faisceaux parallèles 8 balayent une zone de 250 millimètres de haut.

Un tel dispositif amplificateur optique permet notamment de réaliser une barrière immatérielle comme représenté sur la figure 4. En face du dispositif selon la présente invention désigné par A dans son ensemble, dont les parties constitutives portent les mêmes références que dans les figures précédentes, on dispose une surface rétroréfléchissante B : ainsi le faisceau réfléchi par cette surface est superposé au rayon incident.

Afin de reconnaître ce faisceau réfléchi, il y a lieu de prévoir des moyens de reconnaissance spécifiques : par exemple on dispose une lame semi-transparente 9 qui dévie ce faisceau réfléchi vers un récepteur photo-électrique.

Il est bien évident qu'on ne sortira pas du cadre de la présente invention en remplaçant l'émetteur photo-électrique oscillant 3 tel que décrit par des dispositifs équivalents qui permettent de réduire encore plus l'encombrement du dispositif amplificateur optique selon la présente invention.

Comme il a été indiqué plus haut, un des buts de ce dispositif étant la réalisation de barrières immatérielles, les circuits électroniques constituants un tel dispositif doivent être d'une grande fiabilité. De plus, la conception de ces circuits doit être telle que la défaillance accidentelle d'un composant ou d'un groupe de composants doit être interprétée comme l'occultation de la barrière.

Ainsi qu'on peut le voir sur la figure 4, l'émission du faisceau incident est réalisée par une source lumineuse 4 qui reçoit des impulsions issues d'un générateur 11 éventuellement amplifiées par un amplificateur 12.

Le faisceau réfléchi par la surface rétroréfléchissante est capté par un récepteur photo-électrique 10 dont les signaux qu'il délivre sont appliqués à l'entrée d'un amplificateur 13. A la sortie de cet amplificateur 13 les signaux sont comparés dans un comparateur 14 à une tension de référence 15 et appliqués à l'entrée d'un détecteur synchrone 16 recevant par ailleurs les impulsions d'émission du générateur 11. Les informations issues de ce détecteur 16 sont traitées dans un organe logique 17 puis transmises, après avoir été éventuellement amplifiées par un amplificateur 18, à une commande du relais 19 qui constitue généralement l'élément de sortie.

Le détecteur synchrone 16 ne délivre une information à l'organe logique 17 que si le récepteur photo-électrique 10 reçoit une impulsion en coïncidence avec une impulsion d'émission : ce montage permet de s'affranchir d'impulsions lumineuses parasites et par suite d'obtenir une très grande immunité.

Plus précisément la logique 17 assure les fonctions suivantes :

- lorsque le faisceau est libre, des signaux sous forme d'impulsions, sont issus de 16. La logique 17 divise la fréquence des impulsions reçues et délivre au circuit 18 des signaux à fréquence inférieure compatible avec la commande du relais 19.

- Par ailleurs, aucun signal n'est issu de 17 si une seule impulsion est absente à l'entrée de ce circuit, qu'il s'agisse d'une occultation brève du faisceau ou de la défaillance de l'un des constituants situés en amont.

- Après l'occultation du faisceau et dès que l'espace surveillé est à nouveau libre, des signaux apparaissent en sortie du circuit 16. Une autre caractéristique de 17 est de ne permettre la commande du relais 19 qu'après délivrance d'un grand nombre d'impulsions (par exemple : 200), ce qui constitue un retard et une sécurité pour l'opérateur : la commande de la machine étant ainsi retardée.

Un tel dispositif peut également comprendre des circuits de contrôle qui sont connus en eux-mêmes, pour notamment s'assurer de l'émission de lumière, du balayage par le faisceau de toute la surface du miroir parabolique, ainsi que de l'aptitude de ce dispositif à détecter la présence d'un objet. Dans tous les cas de défaillance, la commande du relais 19 doit être interrompue ce qui entraîne l'arrêt de la machine.

Pour réaliser des barrières immatérielles de grande hauteur, certaines dépassant même deux mètres de haut, on peut associer plusieurs barrières unitaires selon la présente invention. Ces dispositifs peuvent avoir en commun notamment la source de lumière 4 : ceci permet de minimiser les coûts de telles installations, ainsi que cela est montré sur la figure 5 où les références sont les mêmes que pour les autres figures, trois lames semi-transparentes 20 étant interposées entre la lumière et chacune des trois barrières unitaires représentées pour permettre l'alimentation avec une source lumineuse unique.

**0042805**

Le miroir plan 21 permet de rendre moins profond le système. Il est incliné à 45° par rapport à l'axe focal.

## REVENDICATIONS

1.      Barrière immatérielle bi-dimensionnelle caractérisée par le fait qu'elle comporte un émetteur photo-électrique oscillant mécaniquement, un miroir parabolique et un miroir hyperbolique de même foyer, et ayant leur concavité tournée dans le même sens, l'émetteur photo-électrique oscillant étant situé de telle sorte que le faisceau lumineux émis soit réfléchi d'abord par le miroir hyperbolique, puis par le miroir parabolique.

2.      Barrière selon la revendication 1, caractérisée par le fait que ledit émetteur photo-électrique oscillant est situé au foyer extérieur du miroir hyperbolique.

3.      Barrière selon les revendications 1 et 2 prises séparément, caractérisée par le fait que le miroir hyperbolique et le miroir parabolique sont décalés l'un par rapport à l'autre de telle sorte que ledit miroir hyperbolique n'intercepte pas les rayons lumineux issus dudit miroir parabolique.

4.      Barrière selon les revendications 1 à 3 prises séparément, caractérisée par le fait que ledit émetteur photo-électrique oscillant comprend un miroir plan oscillant autour de son axe vertical et une source lumineuse fixe.

5.      Barrière selon la revendication 4, caractérisée par le fait que ledit miroir plan est solidaire d'un cadre galvanique.

6.      Barrière selon les revendications 1 à 3 prises séparément, caractérisée par le fait que ledit émetteur photo-électrique oscillant comprend une source lumineuse fixe et un miroir polygonal qui est animé d'un mouvement de rotation, et dont le nombre de faces est de $2\pi/\alpha$, $2\alpha$ étant le déplacement angulaire du rayon lumineux émis nécessaire pour couvrir toute la surface dudit miroir hyper-bolique.

**Fig. 1**

**Fig. 2**

Fig:3

Fig:4

**Office européen des brevets**

# RAPPORT DE RECHERCHE EUROPEENNE

EP 81 40 1014

| DOCUMENTS CONSIDERES COMME PERTINENTS | | | CLASSEMENT DE LA DEMANDE (Int. Cl.³) |
|---|---|---|---|
| **Catégorie** | Citation du document avec indication, en cas de besoin, des parties pertinentes | Revendica-tion concernée | |
| | US - A - 3 674 334 (A. OFFNER) <br> * colonne 4, lignes 12-50; figures 1-4 * | 1-3 | G 01 V 9/04 <br> G 02 B 17/06 |
| | GB - A - 997 278 (STANDARD TELEPHONES & CABLES LTD) <br> * page 2, ligne 119 - page 3, ligne 43; figures 1-3 * | 1-4 | |
| A | US - A - 3 527 526 (E. SILVER-TOOTH) <br> * abrégé et figure 1 * | 1 | **DOMAINES TECHNIQUES RECHERCHES (Int. Cl.³)** <br><br> G 08 B 13/18 <br> G 01 V 9/04 <br> F 16 P 3/14 <br> G 02 B 17/06 <br> G 01 D 21/04 |
| A | US - A - 3 460 886 (N. RUMSEY) <br> * abrégé; figure 1 * | 1 | |
| A | FR - A - 1 393 577 (SOC. EUROP. DE MATERIELS SPECIAUX) <br> * page 1, colonne de droite, lignes 7-14; figure unique * | 1 | **CATEGORIE DES DOCUMENTS CITES** |
| | | | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 27.08.1981 | GALLO |